Europäisches Patentamt

European Patent Office

Office européen des brevets

(19)

(11) Publication number: **0 401 759**

**A1**

(12)

# EUROPEAN PATENT APPLICATION

(21) Application number: **90110629.4**

(22) Date of filing: **05.06.90**

(51) Int. Cl.5: **B60J 3/02**

(30) Priority: **05.06.89 ES 8901954**

(43) Date of publication of application:
**12.12.90 Bulletin 90/50**

(84) Designated Contracting States:
**AT BE DE FR GB IT NL SE**

(71) Applicant: **INDUSTRIAS TECHNO-MATIC, S.A.**
**Calle Espronceda 324**
**E-08027 Barcelona(ES)**

(72) Inventor: **Gabas, Carlos**
**180 Calle Rocafort**
**E-08029 Barcelona(ES)**

(74) Representative: **Marx, Lothar, Dr. et al**
**Patentanwälte Schwabe, Sandmair, Marx**
**Stuntzstrasse 16 Postfach 86 02 45**
**D-8000 München 80(DE)**

(54) Safety mirror assembly for attaching to automobile sun visors.

(57) Safety mirror assembly for automobile sun visors.

This safety mirror assembly consists of a conventional glass mirror (1) with an adhesive layer or tape (2) on its reflective surface side, and an integral, transparent cover (3), essentially rectangular in shape, made in one piece from plastic material, which holds the glass mirror (1), this integral transparent cover (3) comprising: a continuous frame, the section of which complies with current safety standards; some lateral guides (4) fitted with support flanges (5) and some positioning stops (6, 7), to allow the insertion and securing of the glass mirror (1) inside the integral transparent cover (3).

Applicable to the automotive industry.

Fig.1

EP 0 401 759 A1

## SAFETY MIRROR ASSEMBLY FOR AUTOMOBILE SUN VISORS

### Technical field of the invention

The subject of this invention is a safety mirror assembly for automobile sun visors and in particular one that is attachable to the sun visor on the passenger side.

### Background

The constant advancement of safety conditions inside automobiles is one of the priorities of car makers and present legislation in this respect. As an example, it is recommended to use non-splinter window glass and to eliminate all sharp edges, the minimum curve radii being fixed at not less than 3.2mm., since in the event of a crash or accident these, among other things, can cause the occupants of the vehicle serious injuries. Of course, these safety measures apply to all devices, finishes and equipment in general inside the vehicle, including the so-called "courtesy mirror" which is normally incorporated in the sun visor on the passenger side.

Up to now, the safety measures adopted for preventing any damage that might be caused by the courtesy mirror, traditionally made of glass, in the event of a crash, have consisted essentially of coating the reflective surface side of the mirror with an adhesive layer or tape which, should the mirror break, retains the large and medium-sized fragments of glass. Nevertheless, in practice it has been seen that this does not retain all the small-sized fragments, so in cases of accident it frequently happens that a number of these small glass splinters fall out, with the corresponding risk of serious injuries to the occupants of the vehicle, especially if the fragments come into contact with particularly delicate areas, such as the eyes.

EP-Patent 0088846 describes a courtesy mirror which consists of a shaped sheet of plastic material with a metallised coating on one side that is used as the reflecting element. In this same context FR-Patent 8813077 describes a courtesy mirror made from a shaped sheet of aluminium, one of the sides of which has basically been polished and anodised for use as the reflecting element.

Both the above cases, that is, patents EP 0088846 and FR 8813077, refer respectively to new plastic or aluminium mirrors that replace the traditional glass type. These new mirrors, nonetheless, have a serious drawback which is their inferior quality of image compared to that obtained with the traditional glass mirrors.

### Disclosure of the invention

In order to provide a solution to the problem raised which is, on the one hand, to achieve a suitable image quality on the basis of using traditional glass mirrors and, on the other hand, to avoid the injuries that might be caused to passengers in the vehicle by the mirror getting smashed in the event of a car crash, this invention proposes a safety mirror assembly for automobile sun visors in accordance with the features of claim 1.

The safety mirror assembly for automobile sun visors referred to in this invention is characterised by the fact that it consists of a traditional glass mirror with an adhesive layer or tape on the reflective surface side, and of an integral transparent cover, preferably rectangular in shape, or any other shape adapted to each specific application, made up all in one piece from plastic material, which contains the whole of said glass mirror; this transparent integral cover has a continuous frame whose section complies with current safety standards, and means for fitting and securing the mirror inside it.

In this way, in the safety mirror assembly described in this invention the functions of each of its component parts are completely differentiated. The traditional glass mirror gives a high quality image, superior to that obtained from using reflective materials on plastic or metal supports, as described in the prior art; the transparent integral cover prevents both the emission of bits of glass from the mirror if broken during a car crash and any injuries that might be suffered by the occupant of the vehicle as a result of the occupant himself causing the mirror to break during collision of the vehicle.

The protection provided for the vehicle's occupants in the event of a crash by the transparent integral cover of the safety mirror assembly referred to in this invention is further improved by the fact that the glass mirror has an adhesive layer or tape on its reflective surface side, which to a large extent prevents the bits of mirror from falling out in case of breakage. Thus, the transparent integral cover and the adhesive layer or tape on the mirror are separate safety factors which complement each other, thereby providing the inventive mirror assembly with an optimum level of safety.

Also characteristic of the safety mirror assembly for automobile sun visors referred to in the invention is the fact that the means of inserting and securing the mirror inside the transparent integral cover consist of lateral guides fitted with support flanges which extend almost all the way along the transparent integral cover, and of positioning stops fixed normally to said lateral guides.

Both components of the safety mirror assembly referred to in the invention, the glass mirror and the transparent integral cover, are of such dimensions that they match with each other; so the glass mirror with the aforementioned adhesive layer or tape may be slid close-fittingly along the lateral guides with support flanges on the transparent integral cover until the point where the combined action of the positioning stops holds it securely and without any chance of it shifting in its position of use.

Once the mirror and the transparent integral cover that comprise the safety mirror assembly described in the invention have been fitted together, the assembly may in turn, without any difficulty at all, be attached to automobile sun visors that have structures of known technology.

Brief description of the drawings

The sheet of drawings attached to this report shows the safety mirror assembly for automobile sun visors referred to in this invention, as follows:

Figure 1 is a frontal view, partly in section, of the subject of the invention.

Figure 2 is a view of the longitudinal section of the subject of the invention, taken from Figure 1, along line II-II.

Figures 3 and 4 are side views of the subject of the invention.

Figure 5 is a cross-section view of the subject of the invention, taken from Figure 1, along line V-V.

Detailed description of an embodiment example

The safety mirror assembly for automobile sun visors which is the subject of the invention and which is described here as an embodiment example, is made up of the glass mirror 1 with an adhesive layer or tape 2 and by an integral cover 3 made of highly transparent plastic and large enough to house said glass mirror 1 with the adhesive layer or tape 2. .

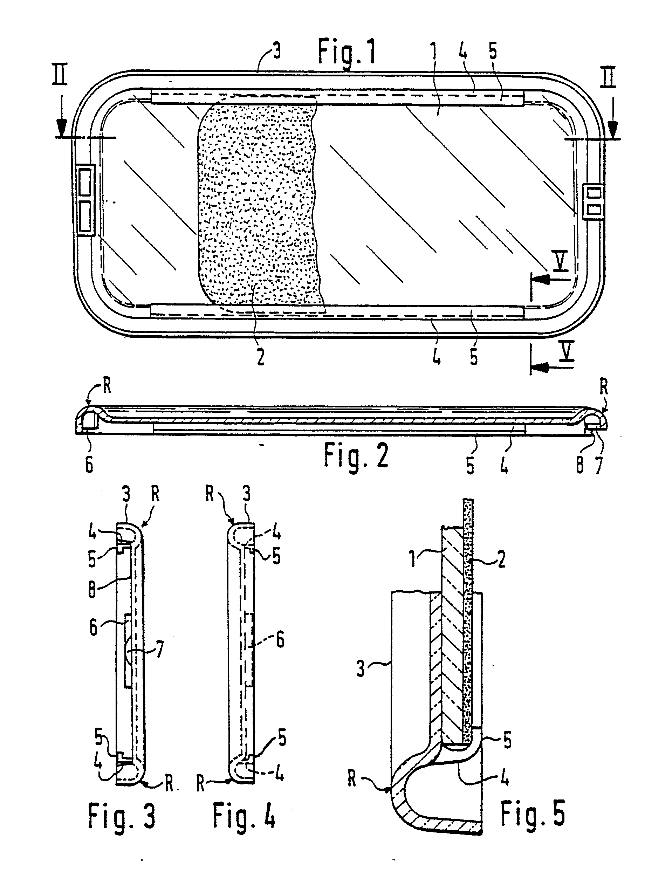

The transparent integral cover 3 in the embodiment example here described is essentially rectangular in shape, as shown in Figure 1 on the attached sheet of drawings, which is the shape most commonly used for the courtesy mirrors located on the sun visor of the passenger side, although this does not exclude other possible variations in shape of said transparent integral cover 3, which could, for example, be square, circular, etc., depending on the needs of each particular application.

. This transparent integral cover 3 has a continuous frame of rounded section, which is shown in detail in Figure 5 on the attached sheet of drawings, the radius R of which complies with current safety standards concerning the elimination of sharp edges inside the vehicle.

In this embodiment example the transparent integral cover 3 has on both its long sides some lateral guides 4 fitted with continuous support flanges 5, said lateral guides 4 and support flanges 5 running almost the whole length of the integral cover 3, as shown in Figures 1 and 2 of the attached sheet of drawings.

The distance between the facing sides of both lateral guides 4, which are parallel to each other, and the distance between the inner sides of the U-shaped wing that acts as retaining means and is formed by each of the support flanges 5, do, of course, correspond respectively to the width and thickness of the glass mirror 1 with adhesive layer or tape 2, so that the mirrors may be slid along, close-fittingly, during their insertion into the transparent integral cover 3, as shown in Figures 1 and 5 of the attached sheet of drawings.

The transparent integral cover 3 also carries the front positioning stop 6 and the rear positioning stop 7; the former determines the foremost position that the glass mirror 1 with adhesive layer or tape 2 can reach during its insertion into said transparent integral cover 3, while the latter fixes the glass mirror 1 with adhesive layer or tape 2 securely in position inside the transparent integral cover 3.

In order to facilitate insertion of the glass mirror 1 with adhesive layer or tape 2 into the transparent integral cover 3 where it remains fixed, a notch 8 has been made in one of the shorter sides of the transparent integral cover 3, which is indicated in Figures 2 and 3 on the attached sheet of drawings corresponding to this embodiment example.

Once the glass mirror 1 with adhesive layer or tape 2 is housed inside the transparent integral cover 3, forming a single functional unit, the safety mirror assembly referred to in this invention may easily be incorporated into the automobile sun visors.

**Claims**

1. A safety mirror assembly for the sun visor of an automobile comprising a mirror (1), an adhesive layer or tape (2) on the reflective surface side of said mirror (1), a transparent integral cover (3) made all in one piece from a plastic material and being large enough to take the whole of said mirror (1), the transparent integral cover (3) having a continuous frame and means for fitting and securing the mirror (1) inside it.

2. A safety mirror assembly according to claim 1, wherein the mirror (1) is a traditional glass mirror.

3. A safety mirror assembly according to either claim 1 or claim 2 wherein the coverr (3) is essentially rectangular in shape.

4. A safety mirror assembly according to any of claims 1 to 3 wherein the integral cover (3) is made from a highly transparent plastic material.

5. A safety mirror assembly according to any of claims 1 to 4 wherein the continuous frame of said transparent integral cover (3) is of known section complying with the present safety standards and regulations.

6. A safety mirror assembly according to any of claims 1 to 5 wherein said means for fitting and securing the mirror (1) inside the transparent integral cover (3) comprise lateral guides (4) fitted with support flanges (5) extending over the whole length of the transparent integral cover (3).

7. A safety mirror assembly according to claim 6 wherein said means for fitting and securing the mirror (1) inside the transparent integral cover (3) additionally comprise front and rear positioning stops (6, 7) fitted normally to said lateral guides (4).

EP 0 401 759 A1

Fig.1

Fig. 2

Fig. 3    Fig. 4    Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | DE-A-2423585 (THERMOPLAST & APPARATEBAU GMBH) <br> * figures 2, 3 * <br> * page 2, lines 18 - 24 * <br> * page 5, line 12 - page 6, line 25 * | 1-6 | B60J3/02 |
| Y | US-A-3776618 (PERISON, SR.) <br> * abstract; figure 5 * <br> * column 4, line 55 - column 5, line 44 * | 1-6 | |
| A,D | EP-A-88846 (CLEARPLAS LIMITED) <br> * abstract; figures 1-6 * <br> * page 5, line 16 - page 7, line 6 * | 1, 5 | |
| | | | **TECHNICAL FIELDS SEARCHED (Int. Cl.5 )** |
| | | | B60J <br> B60R |

The present search report has been drawn up for all claims

| Place of search | Date of completion of the search | Examiner |
|---|---|---|
| THE HAGUE | 12 SEPTEMBER 1990 | D'SYLVA C. |